# EUROPEAN PATENT APPLICATION

(11) **EP 1 618 940 A1**
(43) Date of publication of application: **25.01.2006**
(21) Application number: 05016021.7
(22) Date of filing: 22.07.2005
(51) Int. Cl.: B01D 39/20

(54) **Glass-fiber filter for blood filtration, blood filtration device and blood analysis element**

(30) Priority: 23.07.2004 JP 2004215609
(71) Applicant: FUJI PHOTO FILM CO., LTD., Minami-Ashigara-shi, Kanagawa (JP)
(72) Inventor: Sakaino, Yoshiki, Asaka-shi Saitama (JP); Ito, Toshihisa, Asaka-shi Saitama (JP)
(74) Representative: Albrecht, Thomas

(57) **Abstract**

A glass fiber filter for blood filtration, in which a glass fiber is cleaned with an organic acid and then the surface of a glass fiber is coated with a biocompatible polymer such as poly (alkoxy acrylate), a blood filtration device and a dry-type blood analysis element in which the glass fiber filter for blood filtration is used.

## Description

### Background of the Invention

### 1. Field of the Invention

The present invention relates to a glass fiber filter for blood filtration which is used in performing blood tests of humans and animals, a blood filtration device in which the glass fiber filter is used and a blood analysis element.

### 2. Description of the Related Art

A method for diagnosing human diseases by using blood and urine as a test sample has been practiced for a long time as a method enabling simple diagnosis without damaging the human body.

In particular, blood can be analyzed for many test items in making a diagnosis.

A wet-chemistry analysis method has been developed as an analysis method for testing many items. This is a method of using so-called solution reagents. Since equipment used in wet-chemistry analysis for covering many test items handles many reagent solutions for covering a number of test items in combination, it is, in general, complicated in structure and not simple in operation.

In solving these problems, a method for making analysis simpler and easier has been sought. As one method, a method in which no solution is used inmaking analysis, namely, reagents necessary for detecting a specific component are contained in a dry state, a so called dry-chemistry analysis method, has been developed (Iwata Yuzo, "11. Other analytical method (1) dry chemistry," Laboratory Chemical Practice Manual, issued by Igaku-Shoin Ltd. 1993, Issue Number of "Kensa To Gijyutsu," Vol. 21, No. 5, p.328-333 and Japanese Translation of International Application (Kohyo) No. 2001-512826).

However, either in wet chemistry or in dry chemistry, where blood test samples are handled, whole blood is not used in most cases but plasma or serum obtained after removal of blood cells is used in analysis. Removal of blood cells has been conventionally effected by centrifugally separating blood cells and, therefore, a centrifugal operation is demanded. When plasma obtained by centrifugation is used in detection, the centrifugal operation must be once ceased to supply plasma after centrifugation. Thus, it is difficult to make plasma separation and detection by a continuous operation and it takes a long time to make detection, which poses problems.

Apart from the above, equipment of separating blood cells by using a filter have been developed (Japanese Published Unexamined Patent Application No.10-227788 and others), by which time necessary for blood cell separation is reduced to some extent but not necessarily sufficient in view of the fact that blood cell separation and detection are performed separately.

Further, where a glass fiber is used as a filter for separating blood cells, components eluted from the glass fiber or those adsorbed on the glass fiber may affect subsequent analysis of blood tests. In solving this problem, a method for treating in advance a glass fiber with organic acids such as an acetic acid has been suggested (Japanese Published Unexamined Patent Application No. 2000-162208).

On the other hand, blood tests by which health conditions can be checked readily have increased in importance with the advent of an aging society and is also means by which changes in conditions of life-style related diseases can be known. In dealing with elderly people and life-style related diseases, it is necessary to observe health conditions and progression of diseases over time, thereby cases requiring blood tests have increased. Under these circumstances, it is desired that not onlymedical personnel but also patients collect blood specimens by themselves to make analysis quickly and simply.

For this purpose, an analyzer integrating means from blood collection to analysis in combining of collection of blood specimens by using a needle, blood cell separation by filtration/centrifugation and wet-chemistry analysis by using an electrode (Japanese Published Unexamined Patent Application No. 2001-258868) has been proposed, however, it has not been sufficiently satisfied in terms of convenience. Further, it may cause variation in measured values and is not satisfactory in terms of accuracy of measurement in laboratory tests.

It has been demanded at clinical practices to perform operations more quickly from collection of test samples to detection. Further, in view of nosocomial infection which has been a serious social problem in recent years, it is particularly demanded to prevent infections resulting fromblood. Proposed is an analyzer integrating means from blood collection to analysis and detection in combination with a photo-detector, as a blood test unit which can prevent personnel engaged in laboratory tests from contacting plasma or serum (Japanese Published Unexamined Patent Application No. 2003-287533).

### Summary of the Invention

The method for treating a glass fiber with an organic acid (Japanese Published Unexamined Patent Application No. 2000-162208) was able to prevent elution of electrolyte components such as a sodium from a glass but was not able to prevent a protein, etc., from being adsorbed to the glass.

As a method for preventing adsorption of components such as a protein on a glass fiber, a method for absorbing a human serum albumin (HSA) or a bovine serum albumin (BSA) to a glass fiber to prevent so-called non-specific adsorption has been considered. However, in filtering whole blood used in component analysis, previously-adsorbed albumin acts as a foreign matter to affect component analysis. Thus, this method is not practical.

Thus, an object of the present invention is to provide a glass fiber filter for blood filtration which can prevent the elusion of components from a glass fiber and the adsorption to a glass fiber when the glass fiber is used as a filter for separating blood cells.

Another object of the present invention is to provide a blood filtration device which can filtrate and collect plasma components similar to those obtained by centrifugation in a short time without any changes in concentrations of plasma components by using the glass fiber filter for blood filtration.

A method for testing a test sample for many items must be better in performance and simpler in operation, and must be performed safely and sufficiently inmeasurement accuracy, when used in laboratory tests. In addition, a test method is demanded that is able to provide a quicker detection for more test items than by a conventional method.

Therefore, still another object of the present invention is to provide a blood analysis element, which can improve measurement accuracy by using the glass fiber filter for blood filtration, and promptly perform safe and easy operation for many items for detection.

After keen examination, the inventors have found that the above-described objects can be attained by covering the surface of a glass fiber with a polymer. In other words, the present invention has attained these objects by having the following constitutions.
(1) A glass fiber filter for blood filtration comprising a glass fiber,
   wherein a surface of the glass fiber is coated with a polymer.
(2) A glass fiber filter for blood filtration comprising a glass fiber,
   wherein the glass fiber is cleaned with an acid, and then a surface of the glass fiber is coated with a polymer.
(3) The glass fiber filter for blood filtration as described in (1) or (2) above,
   wherein the polymer is an acrylate polymer.
(4) The glass fiber filter for blood filtration as described in (3) above,
   wherein the acrylate polymer is a poly (alkoxy acrylate).
(5) A blood filtration device comprising a glass fiber filter for blood filtration as described in any of (1) to (4) above.
(6) The blood filtration device as described in (5) above, which further comprises:
   a plurality of members; and
   a seal member,
   wherein the plurality of members are fitted and the seal member is wedged into a part to be fitted, so as to attain a substantially air-proof and water-proof condition under a reduced pressure.
   (7) The blood analysis element comprising:
      a glass fiber filter for blood filtration as described in any of (1) to (4) above; and
      a dry analysis component,

wherein a filtrate that has passed through the glass fiber filter contacts with the dry analysis component.

### Brief Description of the Drawings

FIG. 1 shows a photo taken by a scanning electron microscope for the glass fiber to which whole blood was dropped down and lyophilized;
FIG. 2 shows photos showing that where no glass fiber is used in whole blood specimen solution, red blood cells flow smoothly, but where glass fiber is used, red blood cells are entangled in fine glass fiber, approximately 2µm in diameter;
FIG. 3 shows a perspective view of the fitting-type blood filtration device before being fitted;
FIG. 4 shows a cross sectional view of the filter accommodating member 12 of the fitting-type blood filtration device;
FIG. 5 shows a cross sectional view of the holder member 14 of the fitting-type blood filtration device;
FIG. 6 shows a cross sectional view of the fitting-type blood filtration device in fitting;
FIG. 7 shows a pattern diagram of one embodiment of the dry analysis element for a multiitem test;
FIG. 8 shows a pattern diagram of one embodiment of the dry analysis element for a multiitem test (after assembly);
FIG. 9 shows a pattern diagram of one embodiment of the blood collection unit;
FIG. 10 shows a pattern diagram of one embodiment of the blood collection unit (during collection of blood);
FIG. 11 shows a pattern diagram of the measuring device;
FIG. 12 shows a cross sectional view of one embodiment of the fitting-type dry analysis element;
FIG. 13A shows a top view of the upper member 30 of the fitting-type dry analysis element and FIG. 13B shows a cross sectional view of the upper member 30; and
FIG. 14A shows a top view of the lower member 40 of the fitting-type dry analysis element and FIG. 14B shows a cross sectional view of the lower member 40.

### Detailed Description of the Invention

Hereinafter, a detailed description will be made for the present invention.

### [Glass fiber filter for blood filtration]

Hereinafter, a description will be made for the glass fiber filter for blood filtration of the present invention.

The glass fiber filter for blood filtration of the present invention is a filter made of glass fibers, whose surface is covered with a polymer.

### [Glass fiber]

Materials of the glass fiber include a soda glass, a low-alkali glass, a borosilicic acid glass and quartz.

It is also preferable to filtrate by using a fiber whose circle-equivalent diameter is 5µm or lower as a glass fiber.

The circle-equivalent diameter referred to in the present description is a so-called "equivalent diameter," which is a term generally used in the field of mechanical engineering. Where a circular tube is assumed to be equivalent to a pipe having an arbitrary cross-sectional configuration (corresponding to non-water-soluble material, fiber and glass fiber in the present invention), the diameter of the circular tube which is an equivalent is called equivalent diameter, d_{eq}: equivalent diameter is defined as d_{eq}=4A/p by using A: cross-section area of pipe and p: circular length of pipe. Where this equation is applied to a circular tube, the equivalent diameter is in agreement with the diameter of the circular tube. The equivalent diameter is used when the pipe is estimated for fluidity and heat conductivity on the basis of data on the equivalent circular tube, denoting spatial scale of an event (representative length). The equivalent diameter is d_{eq} =4a²/4a=a in the case of a regular tetragon tube, a on one side, and d_{eq} =2h in the case of the flow between parallel flat plates with the channel height of h, the details of which are described in the "Mechanical Engineering Dictionary" compiled by the Japan Society of Mechanical Engineers and published in 1997 by Maruzen Co., Ltd.

Circular equivalent radius is calculated similarly as with the circle-equivalent diameter.

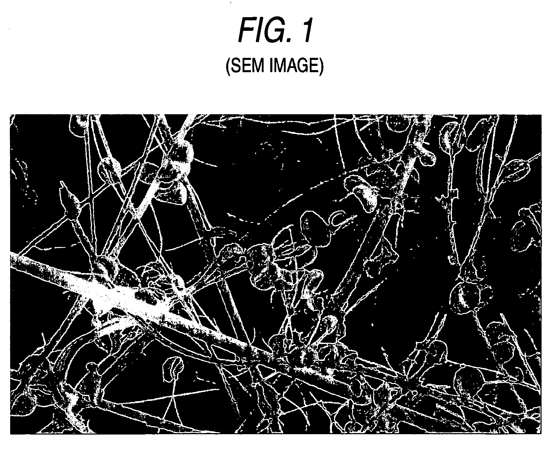

### [Reference Figure 1]

Figure of scanning electron microscope (SEM) showing red blood cells entangled to the glass fiber (GF) (FIG. 1)

Observation was made for how red blood cells in whole blood was captured by a glass fiber filter used as a filteringmaterial for blood filtration. A vacuum blood collecting tube in which heparin lithium was filled as an anti-coagulation agent was used to collect whole blood specimens from healthy male volunteers. In this instance, Hct value was 45%. The whole blood was dropped in a quantity of 10µL to a glass fiber filter GF/D (the glass fiber was approximately 3µm or lower in diameter) made by Whatman plc at room temperature, and the glass fiber filter to which whole-blood was dropped was immediately put into a 0.1 mole/L phosphate buffer solution (pH7.4) containing a 1% glutaric aldehyde and allowed to stand at room temperature for 2 hours to harden the red blood cells. Then, the glass fiber filter was immersed in a mixture of water with t-butanol which was finally substituted by t-butanol through a gradual change in the ratio of water to t-butanol, allowed to stand for approximately one hour in a freezer and frozen. The thus-frozen t-butanol solution which contains the glass fiber filter was placed in a freeze dryer to remove solvents. The thus-prepared dry glass fiber filter to which whole-blood had been dropped was observed under a scanning electron microscope to obtain a picture at 1000-times magnification shown in FIG. 1. In the picture shown in Fig. 1, the full-scale width is 120µm and red blood cells are captured by the glass fiber, the diameter of which is approximately 3µm or lower.

For comparison, glass fiber filters of approximately 8µm and 10µm in diameter and acetyl cellulose fiber filter of approximately 15µm in diameter were used as filtering materials to conduct similar experiments. Red blood cells of approximately 8µm in diameter were not captured by the glass fiber. Further, red blood cells of approximately 10µm in diameter glass fiber or approximately 15µm in diameter acetyl cellulose fiber were not captured.

The above finding has revealed that red blood cells can be quickly and effectively removed from whole blood by using a fiber with a predetermined circle-equivalent diameter, namely, a non-water-soluble substance as a filtering material for blood filtration, when handling whole blood specimens as test samples. Further, there is no need for using special equipment to remove red blood cells from whole blood, thereby making it possible to supply plasma to reagents quickly and shorten the determination time.

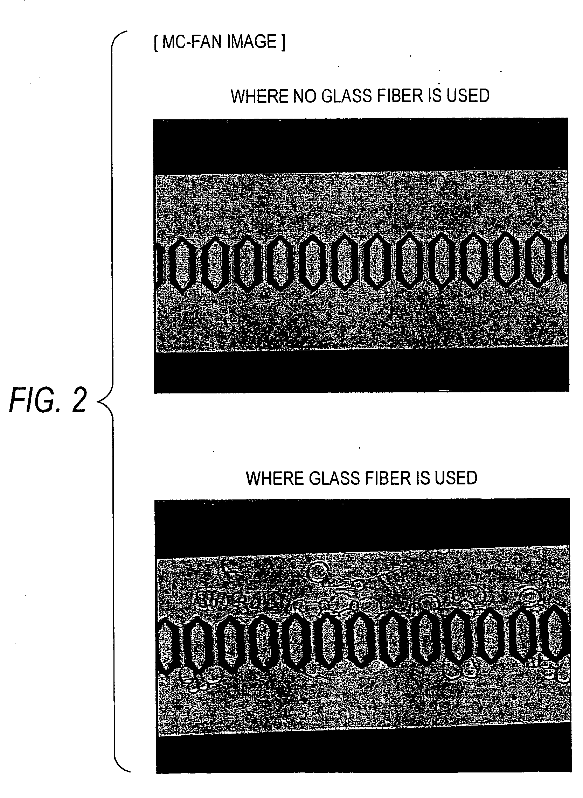

### [Reference Figure 2]

### Figure of MC-FAN showing red blood cells entangled with the glass fiber (GF) (FIG. 2)

MC-FAN (made by Hitachi Haramachi Electronics Co. , Ltd.), equipment for observing and measuring blood flow, was used to observe how red blood cells were captured by the glass fiber, as an application to dynamic morphological observation on cells such as red blood cells which passed through a minute flow channel.

One hundred grams of ion exchange water were poured into a 200mL-volume conical flask, and the glass fiber filter (GF/D, made by Whatman plc) was weighed to be 100mg and added thereto. The resultant was agitated and dispersed by using a magnetic stirrer to prepare a glass fiber suspension with a concentration of 1000ppm. The thus-prepared 1000 ppm glass fiber suspension, 300µL, was dispersed into 10mL of physiological saline solution to prepare a glass fiber suspension with a concentration of 30ppm. The thus-prepared 30 ppm glass fiber suspension, 500µL, was gently mixed with 500µL of whole blood collected by using a heparin lithium blood collection tube to prepare a glass-containing whole blood specimen solution. For comparison, whole blood was mixed with physiological saline solution at respective quantities of 500µL to prepare a whole blood specimen solution.

Equipment of MC-FAN was used to observe how these two whole blood specimen solutions flowed. More particularly, observation was made by using custom chips (models of Bloddy 6-7 and others) made by Hitachi Haramachi Electronics Co., Ltd. FIG. 2 shows one frame of a moving image in which these two whole blood specimen solutions were observed. Where no glass fiber was contained in the whole blood specimen solution, red blood cells flowed smoothly. However, where glass fiber was contained in the whole blood specimen solution, directly observed was red blood cells which were entangled by a fine glass fiber with a diameter of approximately 2µm.

As for the details of the glass fiber, also refer to a description regarding "glass fiber filter used in blood filtration unit (blood filtration device)" to be described later.

### [Surface-coating polymer]

A polymer which coats the surface of a glass fiber must be, first, a polymer which is not found as a component in blood. Further, it is more likely that red blood cells in whole blood may break (hemolyze), where polymer electrolytes such as a polystyrene sulfonate and a polystyrene sulfinate or polymer surface-active agents such as a polyethylene glycol and an ethylene oxide/purpylene oxide copolymer are used. It is, therefore, not practical to use these polymers. Hemolysis can be easily confirmed by visually observing the color of a supernatant obtained by centrifugation of whole blood.

The possibility of hemolysis can be reduced to a minimum by coating the surface of a glass fiber with a biocompatible polymer. To be specific, surface treatment is given by using acrylate polymers such as a polymethyl methacrylate (PMMA), a polyhydroxy ethyl methacrylate (PHEMA) andapolymethoxyethyl acrylate (PMEA), and more preferably by using poly (alkoxy acrylate) such as a PMEA.

Biologically compatible polymers which do not cause hemolysis include, for example, a polypropylene, a polystyrene, nylon, silk and poly (ε-caprolactone), in addition to acrylate polymers. Preferable are acrylate polymers because they are hydrophilic to an appropriate extent.

Acrylate polymers also include poly(alkyl(meta)acrylates) such as a polymethyl methacrylate (PMMA), poly (hydroxy(meta)acrylates) such as a polyhydroxy ethyl methacrylate (PHEMA) and poly (alkoxy(meta)acrylates) such as a polymethoxyethyl acrylate (PMEA).

Particularly preferable are poly (alkoxy acrylates) such as polymethoxyethyl acrylate (PMEA) because they can be dissolved in alcohol-based organic solvents such as ethanol and methanol in treating the surface of a glass fiber and easy in handling.

Further, methods for coating the surface of a glass fiber with a polymer include immersion, application and spray in which an ordinary polymer is used. To be specific, there is a method in which the glass fiber filter to be described later is immersed in a polymer solution or a polymer solution is sprayed to the glass fiber filter. It is preferable to immerse the glass fiber filter in a polymer solution because a uniform coating is provided on the surface of the glass fiber.

### [Acid cleaning]

It is preferable that a glass fiber is cleaned with an acid and then the surface of the glass fiber is coated with a polymer, as the glass fiber filter for blood filtration of the present invention. It is particularly preferable that the glass fiber is cleaned with an organic acid.

Such organic acids include various types of carboxylic acids such as an acetic acid, a citric acid, a succinic acid, a malic acid, a maleic acid and an ethylene diamine tetraacetic acid and an amino acids. Particularly preferable is an acetic acid. These acids should be in concentrations of approximately 0.1µM to 1M and preferably approximately 1µM to 10mM.

Acid cleaning of the glass fiber is conducted by immersing the glass fiber filter in an organic acid or circulating a cleaning solution. The temperature should be from approximately 5 to 80°C and preferably approximately 10 to 60°C. The time should be approximately 1 second to 60 minutes and preferably approximately 0.5 to 20 minutes. An organic acid may be added in a quantity of approximately 0.1 to 50L per 10g of the glass fiber and usually in a quantity of approximately 0.2 to 10L. It is preferable that the acid should be a newly changed one to plural times during the cleaning.

After treatment by acid cleaning, it is also possible to clean the glass fiber with water, thereby removing accretion such as an acid used for cleaning. Purified water is used for this cleaning. Purified water is water which does not contain a calcium, a sodium, a potassium or a chlorine in a quantity that may affect the analysis. Ion exchange water or distilled water is used. Cleaning is conducted at temperatures of approximately 5 to 80°C and usually at room temperature.

The glass fiber filter is treated in such a way that when it is immersed in water at an ordinary temperature for 60 minutes after treatment with acid cleaning, the calcium is eluted in a quantity of 10mg/L or lower, preferably in 1mg/L or lower, the sodium is eluted in a quantity of 400mg/L or lower, preferably in 40mg/L or lower, the potassium is eluted in a quantity of 40mg/L, preferably in 4mg/L or lower, and the chlorine is eluted in a quantity of 600mg/L or lower, preferably in 60mg/L or lower.

### [Blood filtration unit] (blood filtration device)

The glass fiber filter for blood filtration of the present invention is used, for example, as a glass fiber filter in the blood filtration unit to be described later comprising a glass fiber filter andablood filteringmaterial on which micro-porous membranes are laminated and a holder for accommodating the blood filtering material.

Hereinafter, a description will be made for a glass fiber filter, a micro-porous membrane and a holder of the blood filtration unit, which can be used as an example of the blood filtration device of the present invention.

### [Glass fiber filter]

Glass fiber filters are classified into two groups.

The first group focuses on glass fiber filters in which blood cells are trapped sequentially as blood infiltrates in the thickness direction of the glass fiber filter, which is mainly aimed at so-called volume filtration actions. The glass fiber filter of this group is approximately 0.05 to 0.13 in density, thin in diameter of a crude fiber of approximately 10µm or lower, large in retaining particle size of approximately 0.6µm, and great in water permeating speed of approximately 0.7mL/sec or more. Commercially available products of this group include GF/D made by Whatman plc and GA-100 or GA-200 made by Advantech Co., Ltd. Glass fiber filters of this group will be hereinafter referred to as low-density glass fiber filters.

The second group focuses on glass fiber filters mainly aimed at capturing blood cells eluted from a low-density glass fiber filter. The glass fiber filter of this group is high in density of approximately 0.14 or higher, small in retaining particle size of approximately 0.5µm or lower and low in water permeating speed of approximately 0.5mL/sec or lower. Commercially available products of this group include GF/B, GF/C or GF/F made by Whatman plc and GC-50, GF-75, GB-140 or QR-100 made by Advantech Co., Ltd. Glass fiber fitters of this group will be hereinafter referred to as high-density glass fiber filters.

Low-density glass fiber filters are mainly used as glass fiber filters for blood filtering materials.

Cellulose derivatives are allowed to contain between fibers, thereby carrying out a quicker and smoother filtration, or a lectin-permeated layer is provided to prevent hemolysis after blood specimens are collected, according to the methods disclosed in Japanese Published Unexamined Patent Application Nos. 2-208565 and 4-208856. Glass fiber filtersmaybe prepared by laminating a plurality of sheets.

Filtering materials can be integrated by laminating respective layers with an adhesive partially positioned, according to the methods disclosed in Japanese Published Unexamined Patent Application Nos. 62-138756 to 62-138758, 2-105043 and 3-16651.

A quantity of filterable whole blood varies to a great extent, depending on the spatial volume present in a glass fiber filter and the volume of blood cells in whole blood. When a glass fiber filter is high in density (small in particle-retaining pore size), red blood cells are trapped in the vicinity of the surface of the glass fiber filter, thereby often resulting in a closure state of the space in the glass fiber filter at an area quite close to the surface. Therefore, filtration does not proceed any longer and results in a smaller quantity of plasma that can be filtered and collected. In this instance, if suction is performed under more severe conditions in an attempt to increase the quantity of plasma to be collected, blood cells may break, that is, hemolysis will take place. In other words, this is a process similar to surface filtration and low in a spatial-volume utilization rate of the filter.

Water permeating speed is effective as an index corresponding to the spatial volume or the plasma filtration quantity. Water permeating speed indicates a quantity of filtration per unit area obtained when a predetermined area of a glass fiber filter is hermetically retained in a filtration unit of which the inlet and outlet are narrowed down so as to be connected to a tube, and a certain quantity of water is added to pressurize or depressurize at a certain level of pressure, and has a unit of mL/sec, etc.

To be specific, a glass fiber filter of 20mm in diameter is set in a filtration unit, on which a 100mL-syringe is placed to supply 60mL of water so as to allow the water to flow down spontaneously and a quantity of water which passed through the glass fiber filter for 30 seconds from 10 seconds to 40 seconds after start of the flow is regarded as a water permeating quantity. Then, the water permeating speed per unit area is calculated with reference to the quantity.

Thickness of a low-density glass fiber filter is measured on the basis of a quantity of plasma to be collected, density (void ratio) and area of the glass fiber filter. When analysis is made for plural items by using a dry analysis element, plasma will be needed in a quantity of 100 to 500µL, and a practical area of the glass fiber filter is approximately 1 to 5cm². In this instance, thickness of the low-density glass fiber filter should be approximately 1 to 10mm, preferably approximately 2 to 8mm and more preferably from approximately 3 to 6mm. The low-density glass fiber filter can be provided with the above-described thickness by laminating one sheet or a plurality of sheets, for example, 1 to 10 sheets and preferably 2 to 6 sheets.

Regarding blood filtering materials, finely cut chips may be used in a part or a whole of a low-density glass fiber filter layer. One sheet of the glass fiber filter is approximately 0.2 to 3mm in thickness and usually from 0.5 to 2mm. This filter is finely cut into chips whose diameter is approximately 10 to 30mm and preferably from 15 to 25mm. There is no particular restriction on the form of these finely cut chips, and any form such as a square, a rectangle, a triangle and a circle will do. Where the chips are cut in a circular form with the aim of using all glass fiber filters in principle, chips each side of which is recessed are used in combination. In most cases, they are made in a rectangular form, with the ratio of the long side to short side ranging from approximately 1.0 to 5.0 and preferably in the range from approximately 1.0 to 2.5.

The finely cut chips are made by using a commercially available cutter that can provide chips with the above size. No particular attention to the direction of fibers is needed in filling these finely cut chips.

### [Micro-porous membrane](porous membrane)

A micro-porous membrane is provided on a filtrate outlet of a glass fiber filter for facilitating the separation of plasma from blood cells and also preventing blood cells from leaking.

A micro-porous membrane is made hydrophilic on the surface, provided with the ability to separate blood cells, free of hemolysis which will substantially affect the analysis and able to specifically separate blood cells and plasma from whole blood. The pore size of the micro-porous membrane should be smaller than the particle-retaining size of the glass fiber filter but larger than 0.2µm or more, preferably approximately 0. 3 to 5µm and more preferably approximately 1 to 3µm. Further, the micro-porous membrane with a higher void ratio is preferable. To be specific, the void ratio should be approximately 40% to approximately 95%, preferably approximately 50% to approximately 95% and more preferably approximately 70% to approximately 95%. Examples of the micro-porous membrane include a polysulfone membrane, a fluorine-containing polymer membrane, a cellulose acetate membrane and a cellulose nitrate membrane. They also include micro-porous membrane the surface of which is made hydrophilic through hydrolysis or by using hydrophilic polymers and active materials.

Preferable micro-porous membranes include a polysulfone membrane and a cellulose acetate membrane, and particularly preferable is a polysulfone membrane. In blood filtering materials, a glass fiber filter is provided on the blood supply side and a micro-porous membrane is provided on the outlet.

The micro-porous membrane should be approximately 0.05 to 0.3mm in thickness and in particular preferably approximately 0.1 to 0.2mm. The membrane may be usually sufficient in one sheet but can be used in a plurality of sheets as appropriate.

### [Holder]

A holder is to accommodate a blood filtering material and provided with a blood inlet and a filtrate outlet. The holder is in general formed of a body for accommodating blood filtering materials and a lid which is separated from the body. Both the body and lid are usually provided with at least one opening, and the one is to act as a blood supply port or as a pressure port in some cases and the other is to act as a suction port or as a discharge port for removing filtered plasma or serum. It is also possible to provide separately a discharge port for filtered plasma or serum. Where the holder is made in a rectangular form and the lid is provided on the side wall, both the blood supply port and the suction port can be provided on the body.

The volume of a blood filtering-material accommodating-part must be larger than a total volume of the filtering material to be accommodated in a dry state or in a swollen state where blood is absorbed. Where the volume of the accommodating part is smaller than a total volume of the filtering material, an effective filtration does not need to be performed or hemolysis may occur. The ratio of the volume of the accommodating part to a total volume of the filtering material in a dry state usually varies from 101% to 300%, depending on the degree of the swollen state of the filtering material, preferably from 110% to 200% and more preferably from 120% to 150%.

Further, the filtering material must be firmly attached to the side wall of the accommodating part and, as a matter of course, it must be constituted so as not to produce a flow channel which does not pass through the filtering material when whole blood is suctioned. Therefore, the diameter of the glass fiber filter should be larger than the inner diameter of the holder by approximately 1 to 10% and preferably by approximately 1 to 30%.

A quantity of a blood filtering material to be filled into the holder should be approximately 0.03 to 0.3g and preferably approximately 0.05 to 0.2g per unit volume (1cm³) of the holder, although it varies depending on the density of the filtering material.

A filtrate vessel for receiving filtered plasma can be provided on the filtrate outlet side of the holder. It is preferable in designing an analyzer that the vessel is provided so that the analyzer can suck plasma at least from the center of the holder. Consequently, a filtrate outlet of the blood filtering-material accommodating chamber and a channel leading to the filtrate receiving vessel are provided away from the center of the holder.

The filtrate receiving vessel may be 10µL to 1mL in volume.

The holder is preferably made of thermo-plastic or thermosetting plastics. Transparent or opaque resins are used, for example, a high-impact polystyrene, a methacrylic ester, polyethylene, polypropylene, polyester, nylon, polycarbonate and various types of copolymers.

The above-described body and the lid are usually assembled by joining or adhering with an adhesive or by other processes.

There is no particular restriction in the form of a blood filtering material. A circular form or a polygonal form is preferable in view of easy manufacture of the blood filtering material. In this instance, the filtering material is made slightly larger than the inner cross section of the holder body, thereby making it possible to prevent plasma from leaking through the side wall of the filteringmaterial. Further, a rectangular form is preferable because cutting loss of the blood filtering material is reduced.

A blood filtration unit is used for supplying blood from a blood inlet of the unit and collecting plasma and serum which were filtrated from an opening on the opposite side. Blood should be supplied in a volume approximately 1.2 to 5 times the volume of the blood filtering material, preferably approximately 2 to 4 times. It is preferable that pressure is applied from the blood inlet or pressure is reduced from the opposite side to accelerate filtration. Such pressure application and reduction means can be easily performed by using a peristal or a syringe. It is preferable to adjust a distance for moving the piston of the syringe so that the volume obtained by movement of the piston can be approximately 2 to 5 times the volume of the filteringmaterial. The movement speed should be approximately 1 to 500mL/min per 1cm² and preferably approximately 20 to 100mL/min. The filter unit is usually disposed after use.

Plasma and serum collected through filtration are subjected to analysis according to an ordinary method. The filtration unit is particularly effective in making analysis of plural items by using a dry analysis element.

Blood filtration units have been disclosed, for example, in Japanese Published Unexamined Patent Application Nos. 9-196911, 9-196911, 9-276631, 9-297133, 10-225448, 10-227788 and others.

### [Fitting holder]

In the present specification, a detailed description will be made approximately hereinafter of a fitting holder as an example of the holder, namely a blood filtration device wherein plural members are fitted and a seal member is wedged into a part to be fitted, thereby attaining substantially water-proof and air-proof conditions under reduced pressure.

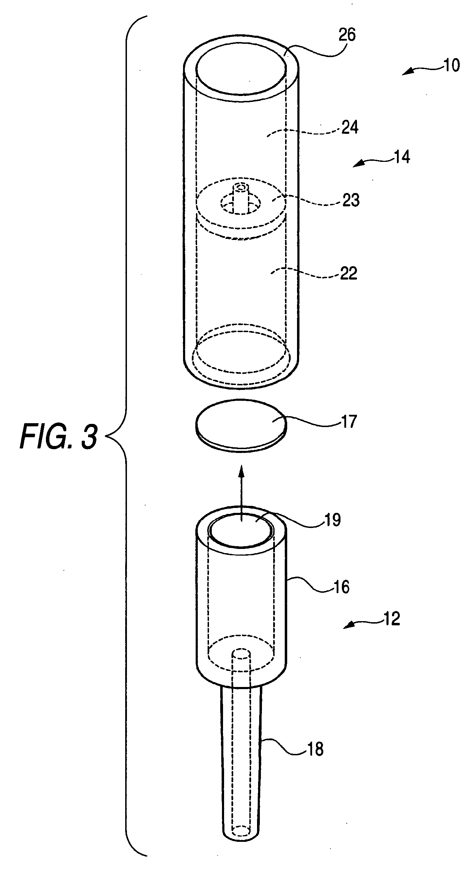

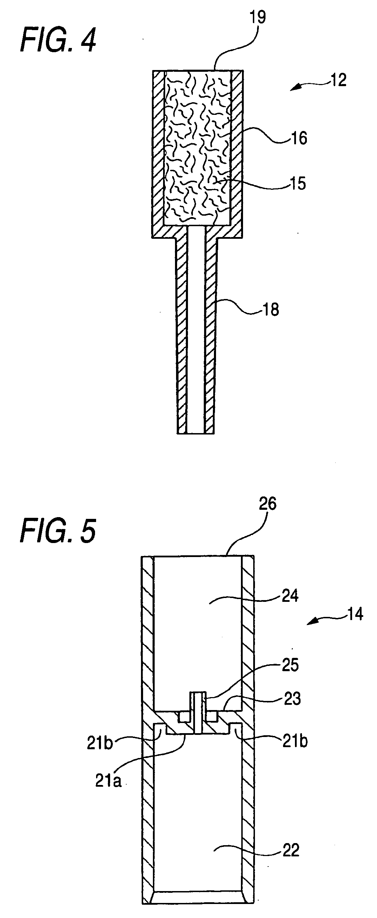

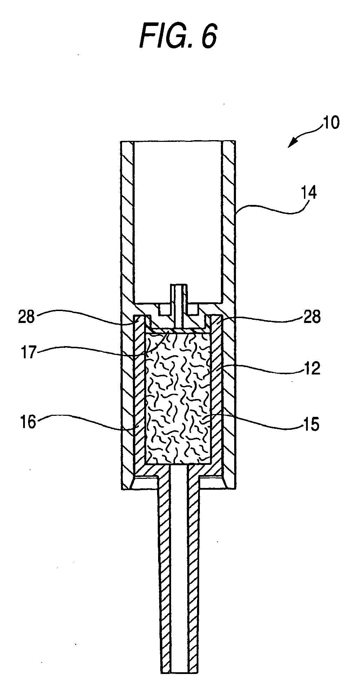

FIG. 3 is a perspective view showing an embodiment of the blood filtration device of the present invention. FIG. 4 and FIG. 5 respectively show the cross sectional views of a filter accommodating member (inner tube) 12 and a holder member (outer tube) 14 which constitute a blood filtration device 10 shown in FIG. 3. FIG. 6 shows a cross sectional view of the blood filtration device 10 in which a filter accommodating member 12 is fitted into a holder member 14.

The blood filtration device 10 shown in FIG. 3 comprising a tubular filter accommodating member 12 and a holder member 14 is designed in such a way that the filter accommodating member 12 can be fitted through a porous membrane 17 (seal member) from below the holder member 14.

As shown in FIG. 3 and FIG. 4, the filter accommodating member 12 is provided with a tubular filter accommodating chamber 16 in which a blood filtration filter 15 is packed. A nozzle 18 for supplying blood to the filter accommodating chamber 16 is extended to the bottom of the filter accommodating chamber 16. Blood introduced through the nozzle 18 runs through the blood filtration filter 15, by which blood cells, etc., and others are collected by the blood filtration filter 15.

An opening 19 for discharging a filtrate (plasma) to the holder member 14 (FIG. 5) is provided on the upper edge of the filter accommodating chamber 16 (on the outlet side).

As shown in FIG. 3 and FIG. 4, the inside of the holder member 14 is divided by a partition 23 into the upper part and the lower part, or a filter-accommodating member accommodating chamber 22 for accommodating the filter accommodating member 12 and a reservoir 24 for storing a blood filtrate (plasma). The reservoir 24 is opened at the upper edge to form a suction port 2 6 which is connected to suction equipment (not illustrated) such as a suction pump.

A cylindrical projection 21a which projects downward is provided at the center of the partition 23, and a tubular channel 25 communicatively connecting to the filter-accommodating member accommodating chamber 22 and the reservoir 24 is extended upward at the center of the projection 21a. A filtrate (plasma) from the filter accommodating member 12 enters the reservoir 24 through the channel 25 in which the filtrate is stored.

Further, a fitting groove 21b is provided on the periphery of the partition 23. When the filter accommodating member 12 is accommodated into the holder member 14, the blood filtration filter 15 which is packed into the filter accommodating chamber 16 is pushed downward and the upper edge on the side wall of the filter accommodating chamber 16 is fitted into the fitting groove 21b (FIG. 6).

As shown in FIG. 3 and FIG. 6, it is preferable to insert a porous membrane 17, a seal member, into a fitting part 28 where the upper edge on the side wall of the filter accommodating chamber 16 is fitted into the fitting groove 21b (FIG. 5). The porous membrane 17 is inserted into the fitting part 28 so as to form a U-shape cross section between an outer circumferential plane of the projection 21a and an inner wall plane of the upper edge of the filter accommodating chamber 16, and the fitting part 28 where the filter accommodating member accommodating chamber 22 is fitted into the filter accommodating chamber 16 is firmly fixed, thereby making it possible to further increase the joining force of the filter accommodating member 12 with the holder member 14.

In addition, as shown in FIG. 6, an opening 19 on the upper edge (on the outlet side) of the filter accommodating chamber 16 is covered with the porous membrane (micro-porous membrane) 17, by which finer impurities that cannot be collected by the blood filtration filter 15 can be collected prior to entrance of plasma into the channel 25, thereby making it possible to improve the filtration property.

In filtering blood by using the blood filtration device 10, first, the filter accommodating member 12 is fitted into the filter accommodating member accommodating chamber 22 through the porous membrane 17, and the suction port 26 on the upper edge of the holder member 14 is connected to a suction pump (not illustrated) and others. A tip of the nozzle 18 is dipped into blood, and the suction pump is actuated to reduce pressure inside the blood filtration device 10, thereby supplyingblood through the nozzle 18 to the filter accommodating chamber 16. Then, blood is filtered under reduced pressure through the blood filtration filter 15 and the porous membrane 17, and a filtrate (plasma) is stored at the reservoir 24.

Since in the blood filtration device 10 of the above embodiment, pressure is reduced along the direction drawing the filter accommodating member 12 to the holder member 14, the inside of the device can be easily kept air-proof and water-proof only by fitting the filter accommodating member 12 into the holder member 14. Therefore, the blood filtration device 10 of the embodiment can eliminate a conventional step of joining a filter accommodating member with a holder member by ultrasonic fusion, simple in structure, low in price and readily available as a disposable device.

The porous membrane 17 is not always required for retaining air-proof and water-proof conditions necessary for filtration but can improve the joining force of the fitting part 28 and the filtration performance of the device, as explained above. Thus, it is preferable to insert the porous membrane 17 into the fitting part 28 where the filter accommodating member 12 is fitted into the holder member 14.

The blood filtration device 10 shown in FIG. 3 is available in various dimensions. In filtration of blood, it is preferable that the filter accommodating member 12 is 5mm to 20mm in inner diameter and the holder member 14 is 6mm to 23mm in inner diameter. It is also preferable that the porous membrane 17 is made larger than the inner diameter of the filter accommodating member 12.

There is noparticular restriction inmaterials of the filter accommodating member 12 and the holder member 14. They are preferably made of materials which are free of dissolution in blood or elution of impurities. For example, transparent polystyrene resin (PS) or polypropylene (PP), and more preferably transparent polystyrene resin (PS) canbeused. The filter accommodating member 12 and the holder member 14 can be manufactured by resin molding or other means.

### [Dry analysis element for a multiitem test] (blood analysis element)

Hereinafter, a description will be made for a dry analysis element for a multiitem test, which can be used as an example of the blood analysis element of the present invention.

In the dry analysis element for a multiitem test, an area sensor, a line sensor or an electrochemical detector is used as a detector. Therefore, detectors will be described at first.

### [Detector]

(a) Any area sensors may be used as long as they can detect light such as ultraviolet light, visible light and infrared light or electromagnetic waves and are arrayed so as to obtain two-dimensional data. They include, for example, CCD, MOS and photo film, in which CCD is preferable. Dry analysis elements for a multiitem test are detected by use of an area sensor to obtain measurement results from data of 1000 pixels or more per item and to enable measurements for a plurality of items at the same time.
(b) Any line sensors may be used as long as they can detect light such as ultraviolet light, visible light and infrared light or electromagnetic waves and are arrayed so as to obtain one-dimensional data. They include, for example, a photo diode array (PDA) and a photo film arrayed so as to detect light in a slit form, in which photo diode array is preferable. Dry analysis elements for a multiitem test are detected by use of a line sensor, thereby enabling measurements for a plurality of items at the same time.
(c) Any electrochemical detectors may be used as long as they can measure the amount of current, difference in potential, electric conductivity and resistance in an electrically-conductive substance vehicle. They include, for example, electrodes made of an electrically conductive substance alone such as gold electrode, platinum electrode, silver electrode and carbon electrode, composite electrodes such as silver/silver chloride electrode, oxygen electrode and modified electrode coated with an enzyme such as glucose oxidase or their combinations. Of these electrodes, a modified electrode coated with an enzyme such as glucose oxidase is preferable. Dry analysis elements for a multiitem test are detected by use of an electrochemical detector, thereby enabling measurements for a plurality of items at the same time.

The glass fiber filter for blood filtration of the present invention is used as a glass fiber filter for blood filtration in the dry analysis element for a multiitem test.

Next, a detailed description will be made for the dry analysis element for a multiitem test. Hereinafter, a description will be made for a case where (a) an area sensor is used as a detector. However, (b) a line sensor or (c) an electrochemical detector may be used similarly as with (a) an area sensor.

The dry analysis element for a multiitem test is provided with a flow channel, a (developed) reactive reagent and a part carrying the (developed) reactive reagent, and ("dry analysis component" in the present invention refers, for example, to a (developed) reactive reagent which reacts in contact with a filtrate (plasma) which passed through a glass fiber filter (to develop color) and a part carrying the reactive reagent. It may be explained representatively with reference to the part carrying the (developed) reactive reagent.) It is preferable that at least any one of the dimensions of the flow channel, width, depth or length, is 1mm or greater and the width of the part carrying the (developed) reactive reagent is 2 times or greater the width of the flow channel, and/or the length of the part carrying the (developed) reactive reagent is 0.4 times or greater the length of the flow channel.

First, a description will be made for the flow channel.

### [Flow channel]

As described above, it is preferable that at least any one of the dimensions of the flow channel, width, depth or length, is 1mm or greater, more preferably in the range from 1mm to 100mm and most preferably in the range from 1mm to 30mm. Within this range, a test sample will efficiently pass through the flow channel, which is favorable.

There is no particular restriction on the form of the flow channel as long as, a test sample and blood, can pass.

Further, the flow channel may be available as a single channel or branched into two or more channels. The channel may be made in any form, namely, a straight line, a curve or others. A straight channel is preferable.

The flow channel may be made of any materials as long as test samples such as whole blood and plasma can efficiently pass through them. To be specific, they include rubbers, resins such as plastics and silicon-containing substances.

Plastics and rubbers include, for example, a polymethyl methacrylate (PMMA), apolycyclicolefin (PCO), a polycarbonate (PC), a polystyrene(PS), a polyethylene (PE), a polyethylene terephthalate (PET), a polypropylene (PP), a polydimethyl siloxane (PDMS), natural rubbers, synthetic rubbers and their derivatives.

Silicon-containing substances include an amorphous silicon such as glass, quartz and a silicon wafer and a silicone such as a polymethyl siloxane. Among them, PMMA, PCO, PS, PC, glass, silicon wafer are preferable.

The flow channel can be made on a solid substrate by microfabrication technique. Materials to be used include metals, silicon, Teflon, glass, ceramics, plastics and rubbers.

Plastics include, for example, PCO, PS, PC, PMMA, PE, PET and PP. Rubbers include natural rubber, synthetic rubber, silicon rubber and PDMS.

Silicon-containing substances include amorphous silicon such as glass, quartz and a silicon wafer and silicone such as polymethyl siloxane. Particularly preferable are, for example, PMMA, PCO, PS, PC, PET, PDMS, glass and a silicon wafer.

A micro-fabrication technique for preparing the flow channel includes, for example, methods described in Micro-Reactor, Synthetic Technology for New Age, (issued in 2003 by CMC and compiled by Yoshida Junichi, professor of Faculty of Engineering, Kyoto University Graduate School) and Micro-fabrication Technology, Application: Application to Photonics, Electronics and Mechatronics (Issued in 2003 by NTC and compiled by the event committee of the Society of Polymer Science, Japan) and others.

Representative methods include LIGA technology using X-ray lithography, high aspect ratio photo-lithography using EPON SU-8, micro-electrical discharge machining (µ-EDM), high aspect ratio machining of silicon by Deep RIE, hot embossing, light molding, laser machining, ion beam machining and mechanical micro-cutting in which micro tools made of hard materials such as diamond are used. These techniques may be used independently or in combination. Preferable micro-fabrication methods are LIGA technology using X-ray lithography, high aspect ratio photo-lithography using EPON SU-8, micro-electrical discharge machining (µ-EDM) and mechanical micro-cutting.

The flow channel may also be prepared by pouring resin into a mold of a pattern formed on silicon wafer by using photoresist and solidifying the resin therein (molding method). PDMS or silicon resins represented by the derivatives may be used in the molding method.

It is preferable that the flow channel is subjected to surface treatment or modification, whenever necessary, so that test samples such as whole blood and plasma can smoothly pass through the channel. Surface treatment and modification may be made differently, depending on materials constituting the flow channel and performed by conventional methods. The method includes, for example, plasma treatment, glow treatment, corona treatment, a method in which surface treatment agents such as silane coupling agent are used, and a method for performing surface treatment by use of a polyhydroxy ethyl methacrylate (PHEMA), a polymethoxyethyl acrylate(PMEA) and an acrylic polymer.

The flow channel may be a part or a whole of the dry analysis element for a multiitem test. In other words, the flow channel may be formed as a part or a whole of the dry analysis element for a multiitem test by using micro-fabrication technique generally applied to so-called micro-reactors and micro-analysis components.

Micro-reactors and micro-analysis components can be prepared according to a method described in "Micro-Reactors" (compiled by Yoshida Junichi and issued by CMC).

Next, a description will be made for (developed) reactive reagents.

### [(Developed) reactive reagents]

Developed reactive reagents are reagents necessary for making a qualitative or quantitative analysis of components to be measured in a test sample, referring to those reacting with the component to be measured in the test sample to develop color or those that emit light through reactions with light, electricity and chemicals such as fluorescence and luminescence. In the present invention, they may be selected arbitrarily according to types of test samples and items to be measured. Examples of the reagents include Fuji Dry Chem Mount Slide GLU-P made by Fuji Photo Film Co., Ltd., (measured wave length; 505nm, measured component; glucose) and TBIL-P (measured wave length; 540nm, measured component; total bilirubin). In the present invention, dry reagents are used as developed reactive reagents contained in a dry analysis element for a multiitem test. Dry reagents are so-called agents used in dry chemistry. Reagents may be used for this purpose as long as they can be used in dry chemistry. To be specific, they include, for example, reagents described in Fuji Film Research Report, No. 40, p.83 (Issued by Fuji Photo Film Co., Ltd. in 1995) and the Japanese Journal of Clinical Pathology, Extra edition, Special feature No. 106, "Dry Chemistry, New Development of Simple Examination" (Issued by the Clinical Pathology Press in 1997) and others.

Where an electrochemical detector is used as a detector, in place of a developed reactive reagent, an enzyme electrode prepared by mixing and solidifying a carbon paste comprising, for example, glucose oxidase (GOD), 1,1'-dimethyl ferrocene and a mixture of graphite powder with paraffin is used as an acting electrode, a silver/silver chloride electrode is used as a reference electrode, a platinum line is used as a counter electrode, thereby determining the current value which increases according to glucose concentrations in a test sample. To be more specific, for example, refer to report No.290, p. 173-177 (1991) by Okuda, Mizutani, Yabuki et al. from the Hokkaido Industrial Research Institute.

A description will be made for a part carrying (developed) reactive reagents.

### [Part carrying (developed) reactive reagents] (dry analysis component)

Hereinafter, a description will be made for a case where developed reactive reagents are mainly used. Where an electrochemical detector is used as a detector, the same will be applied to a part carrying a developed reactive reagent where an area sensor and others are used, except that the part carrying a reactive reagent carries a reactive reagent.

As described above, it is preferable that the width of the part carrying a developed reactive reagent is two times or greater the width of the flow channel, and/or the length of the part carrying a developed reactive reagent is 0.4 times or greater the length of the flow channel.

The part carrying a developed reactive reagent may be available singularly or in plurality or more. Further, where two or more parts are used, they may be provided at one place collectively or arrayed separately.

The part carrying a developed reactive reagent may be in any configuration wherein the part is connected with a flow channel or assembled into the flow channel. Further, in the configuration where the part is connected with the flow channel, the part carrying an enveloped reactive reagent may be a cell. The cell may be available in any configuration as long as it can meet the requirements of width and/or length in relation to the flow channel. The cell is made of the same materials as those of the flow channel. Preferable materials are also the same.

The flow channel and the part carrying a developed reactive reagent may be connected by joining technology. An ordinary joining technology is roughly classified into solid-phase joining and liquid-phase joining. Generally-conducted joining methods include solid-phase joining methods such as pressure bonding and diffusion joining and liquid-phase joining methods such as a welding method, eutectic bonding, soldering method and adhesive joining.

Further, preferable is a highly accurate joining method which does not entail denaturation of materials resulting from heating at a high temperature or destruction of micro-structures such as flow channels resulting from large deformation but keeps a dimensional accuracy. Such technology includes silicon direct joining, positive electrode joining, surface activation joining, direct joining in which a hydrogen bond is used, joining in which an HF solution is used, Au-Si eutectic joining and void-free adhesion.

In addition, such joining methods may be used, in which an ultrasonic wave or laser is used or an adhesive agent or an adhesive tape is used. Joining may also be made by simply applying a pressure.

The part carrying a developed reactive reagent may carry the reagents in any form, as long as it can carry a developed reactive reagent. The part may carry reagents, for example, in a form of test paper, disposable electrode, magnetic material or analytical film. Further, in the case of film, it may be available in a single layer or a multiple layer.

It is preferable to use a dry multi-layer film as a reagent layer at a part carrying a developed reactive reagent. The dry multi-layer film is preferable because all or part of the reagent necessary for a qualitative or quantitative analysis of the component to be measured in a test sample can be incorporated into one or more layers of the film. Said dry multi-layer film includes that used in the above-described dry chemistry. To be specific, the film includes, for example, that described in Fuji Film Research Report, No. 40, p. 83 (Issued by Fuji Photo Film Co., Ltd. 1995) and the Japanese Journal of Clinical Pathology, Extra edition, Special feature No. 106, "Dry Chemistry, New Development of Simple Examination" (Issued by the Clinical Pathology Press 1997) and others. Dry multi-layer films are preferable because they are used as a reagent layer at the part carrying a developed reactive reagent, by which multi-stage reaction can be easily conducted step by step. Dry multi-layer films are also preferable because they can be manufactured stably and in the same quality, thereby eliminating necessity for considering variation in quality among lots and also meeting the measurement accuracy required by laboratory tests.

It is also preferable that the dry multi-layer film is adhesively joined by a porous membrane. The porous membrane includes cellulose porous membranes such as a cellulose nitrate porous membrane, a cellulose acetate porous membrane, a cellulose propionate porous membrane and a regenerated cellulose porous membrane, a polysulfone porous membrane, a polyether sulfone porous membrane, a polypropyleneporous membrane, a polyethylene porous membrane and a polychlorinated vinyhliden porous membrane. More preferable are a polysulfone porous membrane and a polyether sulfone porous membrane.

There is noparticular restriction on a method for adhesively joining a porous membrane to a drymulti-layer film. For example, water is used in a quantity of 15 to 30g per square meter of the dry multi-layer film to moisten the film to which the porous membrane is attached at room temperature, with pressure applied at 3 to 5kg/cm², to adhesively join the porous membrane to the dry multi-layer film.

It is also preferable that fine particles of 100µm or smaller are adhesively joined to the dry multi-layer film, which is used as a reagent layer. These fine particles include inorganic fine particles represented by metal oxides such as a silica, an alumina, a zirconia and a titania and organic polymer fine particles represented by a polystyrene (PS) and a polymethyl methacrylate (PMMA). More preferable are a silica and a polystyrene.

There is no particular restriction on a method for adhesively joining fine particles to a dry multi-layer film. For example, there is a method in which a solution to which a polyvinyl pyrrolidone (PVP), a polyisopropyl acrylamide and a mixture of these is added at 1 to 10% to the mass of fine particles is coated on a multi-layer film and allowed to dry.

### [Filter medium]

Where a test sample is blood as described in the present invention, it ispreferable to perform filtrationprior to supply of the test sample to a part carrying the developed reactive reagent. Filtration may be performed by any known method. In the present invention, a method in which a fiber whose circle-equivalent diameter is 5µm or lower is used as a filter medium is preferable because the method can quickly and effectively remove red blood cells from whole blood, particularly where whole blood is used as a test sample. The method is also preferable in that plasma can be supplied to a reagent after removal of red blood cells from whole blood without actuation of any particular equipment and consequently the time necessary for detection can be shortened.

Combination of a fiber whose circle-equivalent diameter is 5µm or lower with a porous membrane is more preferable in that red blood cells do not leak and plasma can be sufficiently supplied to a reagent even when whole blood is collected in a larger quantity. It is further more preferable that the fiber whose circle-equivalent diameter is 5µm or lower is a glass fiber.

In the present invention, a filter medium in which the surface of a glass fiber in particular is coated with a polymer is used as a medium for blood filtration.

A porous membrane is preferably 0.2µm to 30µm in pore size, more preferably 0.3 to 8µm, further more preferably approximately 0.5 to 4.5µm and particularly preferably 0.5 to 3µm.

In addition, the porous membrane with a higher void ratio is preferable. To be specific, the membrane is preferably approximately 40% to approximately 95% in void ratio, more preferably approximately 50% to approximately 95% and further more preferably approximately 70% to approximately 95%.

Examples of the porous membrane include a polysulfone membrane, a polyether sulfone membrane, a fluorine-containing polymer membrane, a cellulose acetate membrane and a cellulose nitrate membrane, which are conventionally known. Preferable are a polysulfone membrane and a polyether sulfone membrane.

Also usable is a porous membrane, the surface of which is made hydrophilic by means of hydrolysis or using hydrophilic polymers and active agents.

Methods and compounds used for hydrophilic treatment can be used as hydrolysis, hydrophilic polymers or active materials used for hydrophilic treatment.

A test sample is filled from a filling port of a dry analysis element for a multiitem test. The dry analysis element for a multiitem test can be in any configuration as long as a test sample may be filled, and, for example, a flow channel can be connected to the outside of the dry analysis element.

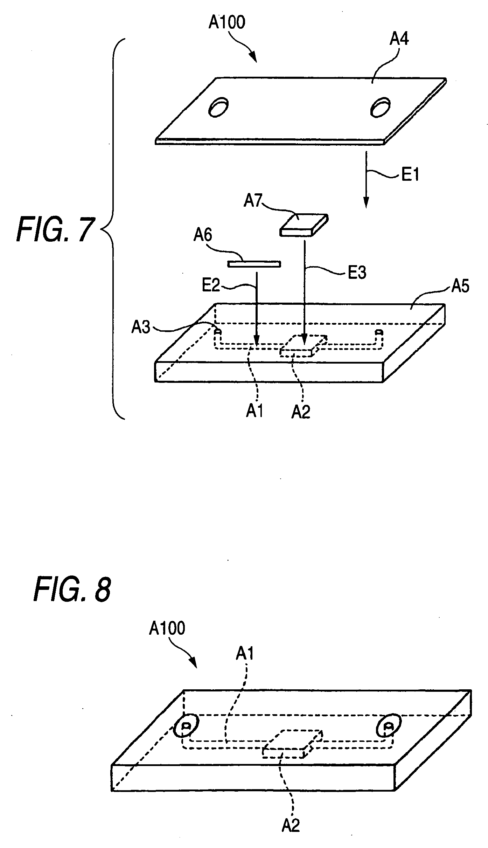

Hereinafter, a description will be made for a preferable embodiment of the dry analysis element for a multiitem test with reference to FIG. 7 and FIG. 8. However, the present invention is not restricted to the embodiment.

A test sample is filled from a filling port A3 of a dry analysis element for a multiitem test A100. The thus-filled test sample running through a flow channel A1 is introduced into a part A2 carrying a developed reactive reagent. As described above, the flow channel A1 can be equipped with a filter medium A6 so that an appropriate filtration method can be employed depending on types of test samples or with a polymer porous substance. Alternatively, a space can be given directly to the flow channel A1. A developed reactive reagent A7 is arrayed at a part A2 carrying a developed reactive reagent. In FIG. 7, a micro-fabrication technique was employed to prepare A1, A2 and A3 on a base plate A5. However, as described above, a lower lid may be provided in place of the base plate A5 to constitute A1, A2 and A3.

The dry analysis element for a multiitem test may be made of the same materials as those of which the flow channel is made. A preferable range is also the same.

The dry analysis element for a multiitem test may be in any configuration and dimensions as long as it can be carried manually. To be specific, preferable is, for example, the element which is a rectangular form with one side of the bottom ranging from approximately 10 to 50mm and the thickness ranging from approximately 2 to 10mm.

In fabrication of the dry analysis element for a multiitem test, the same joining technique can be used that has been employed in connecting the part carrying developed reactive reagents to the flow channel.

Movement of a test sample within the dry analysis element for a multiitem test, namely, movement from the flow channel to the part carrying developed reactive reagents, is done by utilizing pressure and the capillary phenomenon. Utilization of pressure is preferable and that of negative pressure is particularly preferable.

The dry analysis element for a multiitem test can be loaded to a blood collecting device and used as a blood collection unit. Hereinafter, a description will be made for the blood collection unit.

### [Blood collection unit]

The blood collection unit is structured so that the dry analysis element for a multiitem test is attached to the blood collecting device to be slidably assembled while keeping a substantial hermetic condition, thereby forming a sealing space inside the unit so as to be depressurized. Any blood collection unit may be in any configuration and dimensions, as long as the dry analysis element for a multiitem test can be attached to the blood collecting device to be slidably assembled while keeping a substantial hermetic condition, thereby forming a sealing space inside the unit so as to be depressurized. It is preferable that the blood collection unit can be carried manually and handled easily.

The blood collection unit is able to internally provide a hermetic space under reduced pressure, thereby making it possible to bring collected whole blood into a flow channel of the dry analysis element for a multiitem test and quickly introduce it to the part carrying a developed reactive reagent.

The blood collection unit may be made of the same materials as those of which the flow channel is made. A preferable range is also the same.

Infabricationof thebloodcollectionunit, thesamejoining technique can be used that has been employed in connecting the part carrying a developed reactive reagent to the flow channel.

The blood collecting device of the blood collection unit is preferably provided with a puncture needle whose diameter is 100µm or smaller and whose edge angle is 20 degrees or lower. A device which meets the above specifications is preferable so that a puncture can be smoothly carried out to relieve pain during blood collection.

The puncture needle can be joined to the blood collection unit by the same technique that has been used in connecting the part carrying a developed reactive reagent to the flow channel.

The puncture needle is a hollow needle for collecting blood from veins, sliding along the blood collection unit to reduce pressure, by which whole blood is introduced into a flow channel of the dry analysis element for a multiitem test. An ordinary needle may be used as the puncture needle, as long as it meets the above requirements. In view of a small quantity of blood collected, a smaller-sized needle may be used as the puncture needle. Further, it is preferable that the end of a needle is made thinner so as to relieve pain during collection of blood. A puncture needle can be fabricated by utilizing the previously-described micro-fabrication technique.

The puncture needle is usually made of a metal, materials that are used as an injection needle such as stainless steel, nickel/titanium alloy and tungsten. The dry analysis element for a multiitem test may be made of the previously-described resins such as plastics. They include, for example, PCO, PS, PC, PMMA, PE, PET, PP and PDMS.

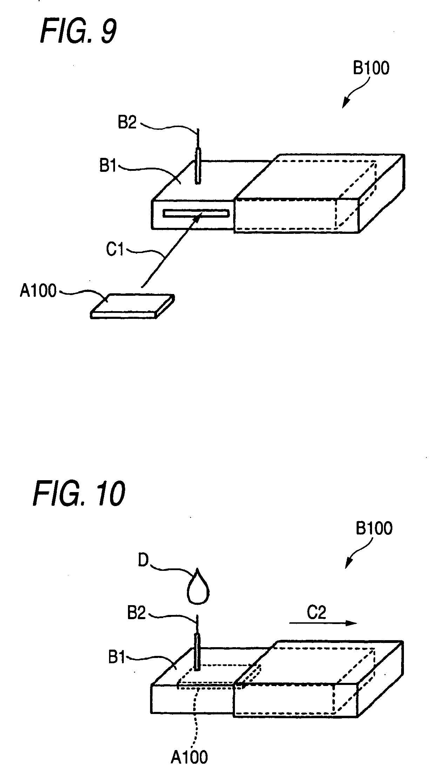

A description will be made for a preferable embodiment of the blood collection unit with reference to FIG. 9 and FIG. 10. However, the present invention will not be restricted thereto.

The dry analysis element for a multiitem test A100 is loaded to a blood collecting device B1 from the direction C1 to form a blood collection unit B100. After being packed, a puncture needle B2 is shot into the skin of a human or of an animal to collect whole blood D.

As described above, the blood collecting device is partially slid toward the direction C2, by which the inside is kept under reduced pressure, collected whole blood D is brought into a flow channel A1 of the dry analysis element for a multiitem test A100 and then introduced into the part carrying a developed reactive reagent A2 to cause a reaction. After the reaction, the dry analysis element for amultiitemtestA100 canbe detached from the blood collecting device B1 and subj ected to detection. The dry analysis element for a multiitem test A100 may be available either in a manner that it is detached to the other side of the blood collecting device B1 along the direction C1 from the blood collecting device B1, namely, in the same direction at which it is packed, or in a manner that it is detached opposite to the direction C1, namely, from the same side where it is packed.

In addition, where peripheral blood is collected from the tip of a finger, elbow or heel by use of a lancet, etc., and the blood is subjected to laboratory tests, it is not necessary to attach the puncture needle to the blood collecting device of the blood collection unit. Any needle may be available as long as it is of a hollow structure and can introduce blood into an analysis component.

### [Test sample]

Test samples to be used in the above-described dry analysis element for a multiitem test include blood obtained from humans and animals.

### [Measuring device]

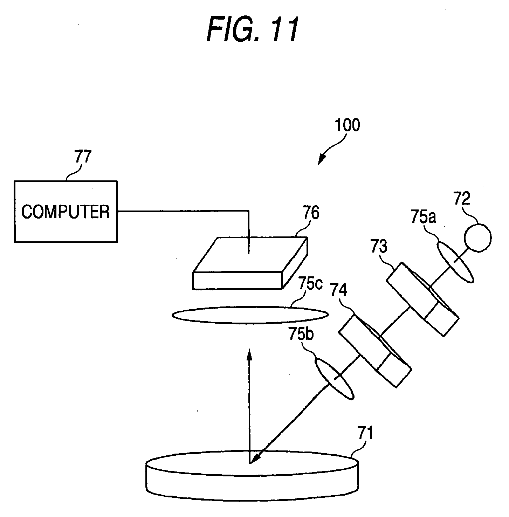

FIG. 11 shows a brief structure of the measuring device in which an area sensor is used.

The measuring device 100 is provided with an installation part 1 of the dry analysis element for a multiitem test in which a test sample to be measured is installed, a light source 2 in which a light emitting element such as a halogen lamp for illuminating light to the test sample is used, a light modulating part 3 for changing the intensity of light illuminated from the light source 2, a wavelength modulating part 4 for changing the wavelength of light illuminated from the light source 2, lenses 5a and 5b for collimating and converging light illuminated from the light source 2, a lens 5C for converging reflected light from the test sample, an area sensor 6 as a light-receiving element for receiving reflected light converged by the lens 5C and a computer 7 which controls respective parts, determines and outputs measurement results in accordance with the state of the light modulating part 3 and the quantity of light received by the area sensor 6. Herein, the measuring device is structured so that the computer 7 controls the respective parts, however, it is also acceptable that another computer is provided for controlling the respective parts.

The dry analysis element for a multiitem test is installed in the installation part 1 of the dry analysis element for a multiitemtest. Actually used for determination is a part ("dry analysis component," hereinafter also referred to as a reagent carrying part) carrying a developed reactive reagent which has reacted in contact with a filtrate (plasma) passed through the glass fiber filter of the dry analysis element for a multiitem test.

The light modulating part 3 varies the intensity of light illuminated to a test sample from the light source 2 by mechanically inserting a metal mesh plate such as a bored stainless steel plate or a neutral density filter such as an ND filter into and out of a space between the light source 2 and the test sample. In the initial setting, the neutral density filter is inserted into a space between the light source 2 and the test sample. Hereinafter, themetalmeshplate is a stainless steelmeshplate. Further, the bored stainless steel mesh plate and the neutral density filter such as the ND filter may be inserted into or out manually.

The wavelength modulating part 4 varies the wavelength of light illuminated to the test sample from the light source 2 by mechanically inserting any one of plural interference filters into and out of a space between the light source 2 and the test sample.

In this embodiment, the wavelength modulating part 4 is installed in a space between the light modulating part 3 and the installation part 1 of the dry analysis element for a multiitem test, but it may be installed between a space between the light source 2 and the light modulating part 3. Further, the plural interference filters may be inserted into and out manually.

The area sensor 6 is a solid image pickup element such as a CCD, and receives light reflected by light illuminated from the light source 2 when a test sample such as blood reacts with reagents in the reagent carrying part in the dry analysis element for a multiitem test installed in the installation part 1 of the dry analysis element for a multiitem test and converts the received light to electrical signals to output them in the computer 7. The area sensor 6 can receive light reflected from the reagent carrying part by the surface unit, thereby making it possible to simultaneously measure the areas of respective reagents, namely, plural test items.

The computer 7 converts electrical signals obtained according to the quantity of light outputted from the area sensor 6 to optical densities based on the data of a calibration curve stored in a memory, etc., which is previously incorporated to determine the contents of respective components contained in a test sample according to the optical densities and output them on a display, etc. In measuring plural items, the computer 7 extracts electrical signals obtained according to the quantity of light output from the area sensor 6 by plural areas at the reagent carryingpart to determine the contents of the components contained in the test sample by plural areas. The computer 7 also controls the light modulating part 3 and the wavelength modulating part 4 in accordance with the quantity of light reflected from the test sample received by the area sensor 6 and types of reagents which are allowed to react with the test sample, thereby changing the quantity of light from the light source 2 or changing the wavelength.

In the above-constituted measuring device 100, the light modulating part 3 removes the stainless steel mesh plate or the ND filter from a space between the light source 2 and a test sample to increase the intensity of light illuminated from the light source 2, thereby quantity of light reflected from the test sample is increased in the quantity to be within a dynamic range of the area sensor 6. Thus, even where the dynamic range of the area sensor 6 is narrow, the reflected light can be received at a high degree of accuracy to improve the accuracy of determining the contents of the components in the test sample.

Where a reagent carrying part containing four types of reagents, for example, A, B, C and D, is used in the measuring device 100, the quantity of light reflected from the areas respectively containing A through D is determined. If any one of the quantities of light reflected is out of the dynamic area of the area sensor 6, the light modulating part 3 inserts the stainless steel mesh plate or the ND filter into or out at a predetermined interval. Further, since the wavelength of light reflected from respective areas is different from each other, the wavelength modulating part 4 switches a plurality of interference filters according to the wavelength.

A description will be made for a case where the quantity of light reflected from an area containing, for example, A and B is too small to be inside of the dynamic range of the area sensor 6, the quantity of light reflected from an area containing C and D is within the dynamic range of the area sensor 6, and the wavelength of light is different from each other when light is emitted on reaction of the reagents of A through D with blood.

In this case, in the measuring device 100, the light source 2 illuminates light to the reagent carryingpart, the area sensor 6 receives light reflected from the respective areas of slides and the computer 7 judges whether or not the quantity of light reflected from these areas is within the dynamic area of the area sensor 6. The quantity of light reflected from the area containing A and B is too small to be within the dynamic range of the area sensor 6, and after light is illuminated from the light source 2 for a certain time, the computer 7 controls the light modulating part 3 so that the ND filter can be removed from a space between the light source 2 and a test sample. After light is illuminated for a certain time in this state, the computer 7 controls the light modulating part 3 so that the ND filter is inserted into a space between the light source 2 and a test sample. Repetition of the operation makes it possible to measure a plurality of components to be measured at a high degree of accuracy by using one dry analysis element for a multiitem test.

The computer 7 controls the light modulating part 3 and also controls the wavelength modulating part 4 according to the types of reagents A through D so that four-types of interference filters can be switched in turn. The wavelength modulating part 4 switches alternately the interference filter corresponding to the reagent A with that corresponding to the reagent B while the light modulating part 3 removes the ND filter and switches alternately the interference filter corresponding to the reagent C with that corresponding to the reagent D while the light modulating part 3 inserts the ND filter. Therefore, the contents of a plurality of components contained in the test sample to be measured can be measured by using one dry analysis element for a multiitem test, even where the wavelengths of light emitted from plural components contained in a test sample are different from each other.

The measuring device 100 can perform measurement at a high degree of accuracy even for a CCD with a narrow dynamic range by changing the intensity of light emitted from the light source 2, and also can perform measurement at a high degree of accuracy as described above by changing not the intensity but the exposure time (time to receive reflected light) at the CCD by controls of the computer 7.

In the present embodiment, light is illuminated to a test sample from the light source 2 and the contents of components contained in the test sample are determined according to the reflected light, however, the contents of components contained in the test sample may be determined according to light transmitted through the test sample.

Further, in the present embodiment, light reflected from the test sample is received by using area sensors such as a CCD. Line sensors may be used in place of area sensors.

As a CCD to be used in the present embodiment, it is preferable to use a so-called honeycomb-type CCD in which light-receiving parts such as photodiodes are arranged vertically and horizontally on a semiconductor substrate at a predetermined interval and the light-receiving parts contained in respective light receiving part arrays adjacently arranged are disposed in a deviated fashion along the direction corresponding to approximately 1/2 of the pitch between the light-receiving parts in the array.

In the above description, the measuring device 100 changes the intensity of light on a real time basis according to the quantity of light reflected from a test sample. However, the content of a target component may be measured by a previously established sequence for the target component contained in the test sample. A description will be made as follows for the operation in this case.

When the reagent carrying part is installed in the installation part 1 of the dry analysis element for a multiitem test to set a measurement item, the measuring device 100 starts measurement in a pattern corresponding to the item. At first, the computer 7 selects the intensity of light to be utilized for measurement from several types of intensity and illuminate light having the thus-selected intensity to a test sample. When the area sensor 6 receives the light reflected from the test sample, the computer 7 outputs the measurement result according to the quantity of reflected light received at the area sensor 6 and the intensity of the above-selected light. A series of these operations enables measurement of components to be measured contained in the test sample at a high degree of accuracy.

In the event that exposure time of the CCD is changed without changing the intensity of light, when a reagent carrying part is installed in the installation part 1 of the dry analysis element for a multiitem test to set a measurement item, the measuring device 100 starts measurement in a pattern corresponding to the item.

First, the computer 7 allows to illuminate light to the test sample. Then, the area sensor 6 receives light reflected from the test sample for an exposure time selected by the computer 7 from several types of exposure time. Finally, the computer 7 outputs the determination result according to the quantity of reflected light received at the area sensor 6 and the thus-selected exposure time. A series of these operations enables measurement of components to be measured contained in the test sample at a high degree of accuracy.

The measuring device 100 is not restricted to the above-described operation in which light is illuminated from the light source 2 to a reagent carrying part and the content of the component contained in a test sample is measured according to the reflected light or transmitted light, but also includes operations in which the content of the component in the test sample may be determined by detecting light such as fluorescence emitted from the reagent carrying part when light is illuminated from the light source 2 to the reagent carrying part or the content of the component in the test sample may be determined by detecting light such as luminescence emitted from the reagent carrying part when no light is shed on the reagent carrying part so that light from the light source 2 is completely blocked off by the light modulating part 3 or no light source 2 is used.

### [Fitting-type dry analysis element for a multiitem test]

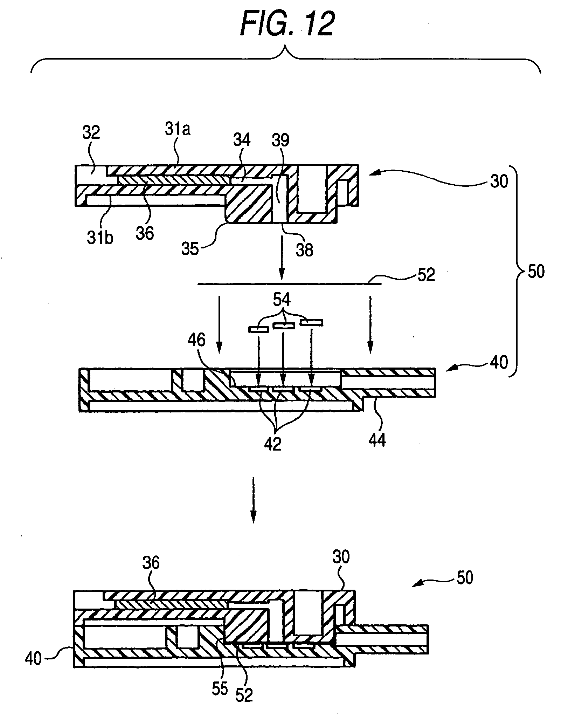

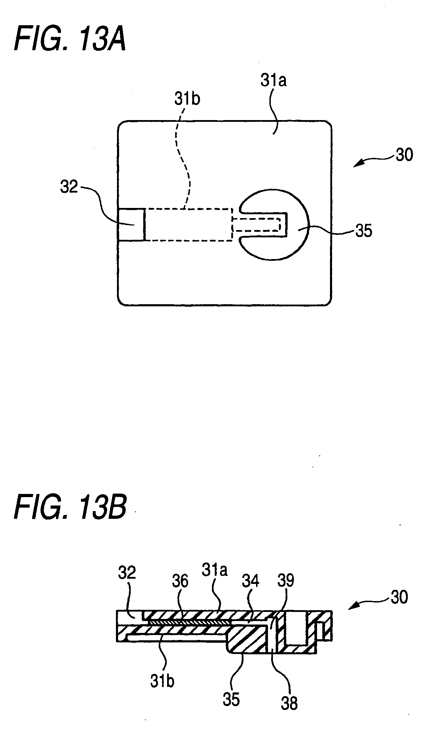

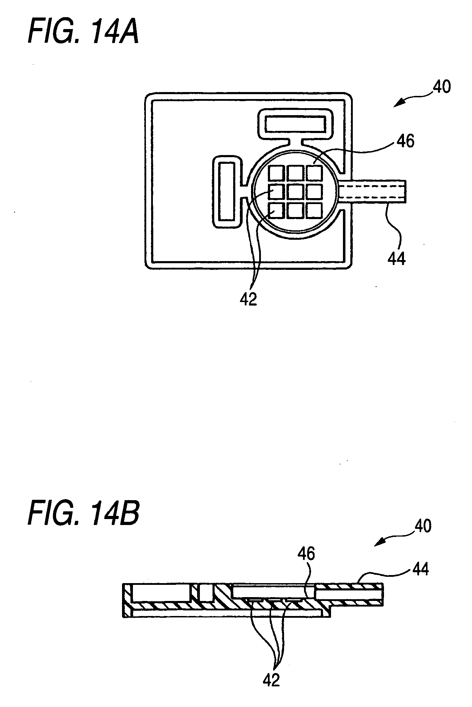

Then, a description will be made for a fitting-type dry analysis element for a multiitem test. FIG. 12 is a cross sectional view showing an embodiment of the fitting-type dry analysis element of the present invention. FIG. 13 and FIG. 14 are respectively top views (FIG. 13A and 14A) and cross sectional views (FIG. 13B and 14B) of an upper member 30 and a lower member 40 constituting the dry analysis element 50 shown in FIG. 12.

As shown in FIG. 12 through FIG. 14, the dry analysis element 50 of the present embodiment is formed of the upper member 30 and the lower member 40 which are substantially rectangular in shape and designed to fit the upper member 30 into the lower member 40 through a porous membrane 52 (FIG. 12), a seal member.

As shown in FIG. 12 and FIG. 13, the upper member 30 is provided with a supply port 32 for supplying blood on the upper plane. The supply port 32 is communicatively connected to a flow channel 34 formed horizontally with two sheets of large and small wall panels 31a and 31b which constitute the upper member 30. The flow channel 34 is filled with a filtration filter 36 for filtering blood supplied.

A short cylindrical fitting convex part 35 is formed on the lower plane of the upper member 30, and a discharge channel 39 communicatively connected to the flow channel 34 is arrayed at the position of the cylindrical axis. A filtrate sent to the flow channel 34 is guided downward by the discharge channel 39 and fed to the lower member 40 (FIG. 14) through an outlet 38 of the discharge channel 39.

As shown in FIG. 12 and FIG. 14, the lower member 40 is provided with a fitting concave part 46 with a round bottom, into which the fitting convex part 35 can be formed so as to be fitted.

A cell 42 including a dry analysis component 54 is provided at the bottom of the fitting concave part 46, for example, at 9 positions in a lattice form. The dry analysis component 54 shows reactions such as a change in color development due to contact with a filtrate of blood (plasma). Further, a suction nozzle 44 connected to suction equipment such as a suction pump (not illustrated) is continuously installed on the side wall of the fitting concave part 46.

In order to form the dry analysis element 50 in which these upper member 30 and the lower member 40 are fitted, as shown in FIG. 12, first, for example, 9 dry analysis components 54 are arrayed on the cell 42 of the lower member 40. Then, the porous membrane 52 larger than the fitting convex part 35 and the fitting concave part 46 is arrayed on the fitting concave part 46, and the fitting convex part 35 is fitted into the fitting concave part 46 in such a way as to stick the porous membrane 52, thereby forming the dry analysis element 50 in which the porous membrane 52 is wedged into the fitting part 55.

When the dry analysis element 50 is used to analyze blood, as described above, the upper member 30 is fitted into the lower member 40 to connect the suction nozzle 44 with the suction pump (not illustrated). Then, blood to be sampled is supplied from the supply port 32 and the suction pump is actuated to filtrate the blood under reduced pressure. The filtrate (plasma) is brought into contact with the dry analysis component 54 opposite an outlet 38 of the discharge channel 39 and analysis is performed by observing a change in color development of the dry analysis component 54. A syringe, etc., may be used in place of the suction pump in filtering by the dry analysis element 50 under reduced pressure.

According to the above fitting-type dry analysis element 50, as with the blood filtration device 10 (FIG. 3), merely fitting the upper member 30 into the lower member 40 can increase joining force of the upper member 30 with the lower member 40 due to depressurization, thereby attaining sufficient air-proof and water-proof conditions. Thereby eliminating processes such as bonding these members and obtaining the dry analysis element 50 simple in structure and at low cost. Thus it is advantageous in disposable use.

Further, identical to the blood filtration device 10 (FIG. 3) mentioned above, the porous membrane 52 is not always required, for keeping air-proof and water-proof conditions necessary for filtration. However, the blood filtration device 10 is disposed in the fitting part 55 where the upper member 30 and the lower member 40 are fitted, thereby improving the joining force at the fitting part 55 and the filtration performance. Therefore, it is preferable that the porous membrane 52 is inserted into the fitting part 55 where the upper member 30 and the lower member 40 are fitted.

A description will be made for the present invention with reference to the following examples, however, the present invention is not restricted thereto.

### [Examples]

### [Example 1] Surface treatment of glass fiber

### (A) Treatment with acetic acid;

Glass fiber filter (GF/D made by Whatman plc.) reduced into approximately 1mm in thickness was cut into a sheet of approximately 200mm in height and approximately 150mm in width, and three sheets of the glass fiber filter were overlapped and placed into a stainless steel vat. Then, 200mL of acetic acid solution (concentration of approximately 16.5mM) prepared by dissolving 1mL of acetic acid in 999g of ion exchange water was gently poured into the vat in which the glass fiber filter was immersed into the solution. The vat was swayed for 30 seconds so that the solution could permeate into the filter and then allowed to stand for 4 minutes and 30 seconds. Thereafter, the vat was tilted for 30 seconds to remove the liquid. The glass-fiber filter was again immersed into the thus-prepared acetic acid solution, namely, treatment with the acetic acid solution was conducted two times. Then, 200mL of ion exchange water was gently poured into the vat in which the glass fiber filter was immersed therein. The vat was swayed for 30 seconds so that the water could permeate into the filter and tilted for 30 seconds to remove the water. The glass-fiber filter was immersed into the ion exchange water additionally 4 times, or treatment with the ion exchange water was conducted 5 times in total. Then, 200mL of methanol was gently poured into the vat in which the glass fiber filter was immersed therein. The vat was swayed for 30 seconds so that the methanol could permeate into the glass fiber filter and tilted for 30 seconds to remove the liquid. Thereafter, the glass fiber filter was pinched by a pair of tweezers and gently extracted. The glass fiber filter was gently placed on a part covered with Kimtowel (disposal paper towel for experiment use) made by Crecia Corporation and also with a Kimwipe made by Crecia Corporation which had been previously placed in a draft and allowed to dry at room temperature for 1.5 to 3 hours while air in the draft was suctioned.

### (B) Treatment with PMEA (poly (methoxyethy acrylate));

As with the acetic acid treatment, glass fiber filter (GF/D made by Whatmanplc.) reduced into approximately 1mm in thickness was cut into a sheet of approximately 200mm in height and approximately 150mm in width, and three sheets of glass fiber filters were overlapped and placed into a stainless steel vat. PMEA solution (approximately 0.1% concentration) prepared by diluting 1mL of toluene solution containing approximately 20% PMEA (PMEA with molecular weight of 100, 000 made by Scientific Polymer Products) in 199mL of methanol was gently poured into the vat in which the glass fiber filter was immersed therein. The vat was swayed for 30 seconds so that the solution could permeate into the glass fiber filter and then allowed to stand for 4 minutes and 30 seconds. Thereafter, the vat was tilted for 30 seconds to remove the solution. Then, the glass fiber filter was pinched by a pair of tweezers and gently extracted. The glass fiber filter was gently placed on a part covered with a Kimtowel and also with a Kimwipe which had been previously placed in a draft and allowed to dry at room temperature for 1.5 to 3 hours while air in the draft was suctioned.

### (C) Vacuum drying;

The glass fiber filter treated with acetic acid and PMEA was placed on a part covered with a Kimtowel and also with a Kimwipe, which was, as it was, placed into a vacuum dryer and subjected to reduced-pressure drying at room temperature for 15 to 21 hours at a pressure of approximately 0.01 to 10mPa. After completion of drying, it was allowed to stand at an atmosphere of the laboratory (approximately 20 to 30°C and approximately 30 to 70% RH) for more than 3 hours and stored in a plastic bag.

### [Example 2]

### Results obtained when the glass fiber filter was loaded into a known filtering device (existing PF)

Resin-made cartridges of filters for collecting plasma from whole blood marketed under the brand name of Fuji Dry Chem Plasma Filter PF from Fuji Film Medical Co., Ltd. were packed with a glass fiber filter treated with acetic acid and PMEA that was not treated with acetic acid and PMEA, respectively, and also packed with a polysulfone porous membrane (made by Fuji Photo Film Co., Ltd.) used in Fuji Dry Chem Plasma Filter PF, which were subjected to ultrasonic fusion to prepare filter cartridges for evaluating blood filtration. The thus-prepared filter cartridges were used to suck and filter whole blood according to the reduced-pressure sequence specified for Fuji Dry Chem 3500 to obtain plasma. The thus-obtained plasma component was determined by using an automatic test analyzer 7170 for laboratory examination (Hitachi Haramachi Electronics Co., Ltd.). For comparison, a plasma component obtained by centrifugation at 3000rpm for 10 minutes was also determined. In this experiment, blood specimens were collected from healthy male volunteers by using a blood collecting tube in which heparin lithium was used as an anti-coagulant. The thus-obtained whole blood showed a hematocrit value of H46%. Further, suction was conducted for 60 seconds to obtain 340µL of plasma from 3mL of whole blood.

It was found that where a glass fiber filter was used as it was, components such as sodium (Na), potassium (K) and chloride ion (Cl) were eluted from the glass to plasma, and components in plasma such as total cholesterol (TCHO) were adsorbed to the glass. It was also found that where an acetic acid-treated glass fiber filter was used, components such as sodium (Na), potassium (K) and chloride ion (Cl) were prevented from eluting from the glass and where a PMEA-treated glass fiber filter was used, components in plasma such as total cholesterol were prevented from adsorption. It was also found that where a glass fiber filter treated with PMEA after treatment with acetic acid was used, plasma was obtained, which was substantially the same as that obtained by centrifugation. The thus-obtained plasma was not colored in red or not greater in values of potassium (K) and lactate dehydrogenase (LDH) as compared with plasma obtained by centrifugation. It was, therefore, found that no hemolysis was brought about.

**Table 1 Table; Level at which analysis of plasma components was performed**

| | Method for collecting plasma from whole blood |
|---|---|
| Level 1 | Centrifugation |
| Level 2 | Suction and filtration were performed by using a conventional cartridge packed with the glass fiber filter free from any treatment. |
| Level 3 | Suction and filtration were performed by using a conventional cartridge packed with the acetic acid-treated glass fiber filter. |
| Level 4 | Suction and filtration were performed by using a conventional cartridge packed with the PMEA-treated glass fiber filter. |
| Level 5 | Suction and filtration were performed by using a conventional cartridge packed with the glass fiber filter treated with PMEA after acetic acid treatment. |

**Table 2 Table: Component values at each level**

| Item | Unit | level 1 | level 2 | level 3 | level 4 | level 5 |
|---|---|---|---|---|---|---|
| Na | [meq] | 138.9 | 145.6 | 138.3 | 140.9 | 138.4 |
| K | [meq] | 4.0 | 4.0 | 3.7 | 3.9 | 3.8 |
| C1 | [meq] | 108.3 | 110.4 | 108.6 | 109.5 | 108.3 |
| Ca | [mg/dL] | 8.66 | 8.87 | 8.79 | 8.74 | 8.66 |
| Total protein (TP) | [g/dL] | 6.97 | 6.73 | 6.7 | 6.74 | 6.84 |
| Total cholesterol (TCHO) | [mg/dL] | 145 | 141 | 143 | 144 | 144 |
| Albumin (ALB) | [g/dL] | 3.99 | 3.98 | 3.98 | 3.97 | 3.98 |
| Lactate dehydrogenase (LDH) | [U/L] | 162 | 162 | 162 | 161 | 162 |

**Table 3 Table: Difference in component values at each level when compared with those of plasma obtained by centrifugation**

| Item | Unit | level 1 | level 2 | level 3 | level 4 | level 5 |
|---|---|---|---|---|---|---|
| Na | [meq] | 0 | +6.7 | -0.6 | +2.0 | -0.5 |
| K | [meq] | 0 | 0 | -0.3 | -0.1 | -0.2 |
| C1 | [meq] | 0 | +2.1 | +0.3 | +1.2 | 0 |
| Ca | [mg/dL] | 0 | +0.21 | +0.13 | +0.08 | 0 |
| Total protein (TP) | [g/dL] | 0 | -0.24 | -0.27 | -0.23 | -0.13 |
| Total cholesterol (TCHO) | [mg/dL] | 0 | -4 | -2 | -1 | -1 |
| Albumin (ALB) | [g/dL] | 0 | -0.01 | -0.01 | -0.02 | -0.01 |
| Lactate dehydrogenase (LDH) | [U/L] | 0 | 0 | 0 | -1.0 | 0 |

### [Example 3] Results obtained on filtration by fitting-type filtration device

### (A) Fitting-type filtration device

Transparent polystyrene resin (PS) was used to prepare an outer tube and an inner tube shown in FIG. 3 through FIG. 6. Glass fiber filter (GF/D made by Whatman) reduced into approximately 1mm in thickness was punched out to be a sheet of 8 mm in diameter. Sixteen sheets of the thus-punched out glass fiber filters were packed into a part of the inner tube of 8mm in inner diameter. A polysulfone porous membrane (made by Fuji Photo Film Co., Ltd.) used in Fuji Dry Chem Plasma Filter PF was punched out in an 11mm in diameter and inserted into a part of the outer tube of 11mm in inner diameter and having a projection of 8mm in diameter. An inner tube packed with the glass fiber was fitted into an outer tube into which polysulfone porous membrane is inserted so as to wedge the polysulfone porous membrane. The thus-fitted filter unit was used to perform blood filtration. To be specific, the unit was prepared, in which a nozzle of the inner tube was dipped into whole blood to suck it from an end which was not used in fitting into the outer tube, thereby performing filtration under reduced pressure to collect plasma from whole blood.

### (B) Results obtained on filtration by fitting-type filtration device

The above-fabricated fitting-type filter unit was used to perform blood filtration. A glass fiber filter treated with acetic acid and PMEA that was not treated with acetic acid and PMEA were used as glass fiber filters to be filled into the fitting-typefilter unit,respectively. Whole blood wassucked and filtered according to the reduced-pressure sequence specified by Fuji Dry Chem 3500 to obtain plasma without leakage of red blood cells. The thus-obtained plasma component was determined by using an automatic test analyzer 7170 for laboratory examination (Hitachi Haramachi Electronics Co., Ltd.). For comparison, plasma obtained by centrifugation at 3000rpm for 10 minutes was also determined. In this experiment, blood specimens were collected from healthy male volunteers by using a blood collecting tube in which heparin lithium was used as an anti-coagulant. The thus-obtained whole blood showedahematocritvalueofH46%. Further, suction was conducted for 200 seconds to obtain 140µL of plasma from 1mL of whole blood.

The fitting-type filter unit was used to suck and filter plasma from whole blood, finding that where a glass fiber filter was used, as it was, components such as sodium (Na), potassium (K) and chloride ion (Cl) were eluted from the glass to plasma, and components in plasma such as total cholesterol (TCHO) were adsorbed to the glass. It was also found that where an acetic acid-treated glass fiber filter was used, components such as sodium (Na), potassium (K) and chloride ion (Cl) were prevented from eluting from the glass and where a PMEA-treated glass fiber filter was used, components in plasma such as total cholesterol were prevented from adsorption. It was also found that where a glass fiber filter treated with PMEA after treatment with acetic acid was used, plasma was obtained, which was substantially the same as that obtained by centrifugation. The thus-obtained plasma was not colored in red or not greater in values of potassium (K) and lactate dehydrogenase (LDH) as compared with plasma obtained by centrifugation. It was, therefore, found that no hemolysis was brought about.

**Table 4 Table; Level at which analysis of plasma components was performed**

| | Method for collecting plasma from whole blood |
|---|---|
| Level 1 | Centrifugation |
| Level 2 | Suction and filtration were performed by using a fitting type cartridge packed with the glass fiber filter free from any treatment. |
| Level 3 | Suction and filtration were performed by using a fitting type cartridge packed with the acetic acid-treated glass fiber filter. |
| Level 4 | Suction and filtration were performed by using a fitting type cartridge packed with the PMEA-treated glass fiber filter. |
| Level 5 | Suction and filtration were performed by using a cartridge packed with the glass fiber filter treated with PMEA after acetic acid treatment. |

**Table 5 Table: Component values at each level**

| Item | Unit | level 1 | level 2 | level 3 | level 4 | level 5 |
|---|---|---|---|---|---|---|
| Na | [meq] | 140.1 | 143.6 | 139.5 | 143.1 | 139.6 |
| K | [meq] | 3.94 | 3.87 | 3.59 | 3.82 | 3.68 |
| C1 | [meq] | 106.6 | 110.0 | 107.5 | 109 | 107.3 |
| Ca | [mg/dL] | 8.66 | 8.78 | 8.73 | 8.84 | 8.67 |
| Total protein (TP) | [g/dL] | 7.00 | 6.78 | 6.85 | 6.83 | 6.92 |
| Total cholesterol (TCHO) | [mg/dL] | 154 | 152 | 154 | 151 | 154 |
| Albumin (ALB) | [g/dL] | 4.03 | 4.08 | 4.05 | 4.05 | 4.06 |
| Lactate dehydrogenase (LDH) | [U/L] | 165 | 172 | 173 | 172 | 171 |

**Table 6 Table: Difference in component values at each level when compared with those of plasma obtained by centrifugation**

| Item | Unit | level 1 | leve12 | level 3 | level 4 | level 5 |
|---|---|---|---|---|---|---|
| Na | [meq] | 0 | +3.5 | -0.6 | +3.0 | -0.5 |
| K | [meq] | 0 | -0.07 | -0.35 | -0.12 | -0.26 |
| C1 | [meq] | 0 | +3.4 | +0.9 | +2.4 | +0.7 |
| Ca | [mg/dL] | 0 | +0.12 | +0.07 | +0.18 | +0.01 |
| Total protein (TP) | [g/dL] | 0 | -0.22 | +0.02 | -0.17 | -0.08 |
| Total cholesterol (TCHO) | [mg/dL] | 0 | -2 | 0 | -3 | 0 |
| Albumin (ALB) | [g/dL] | 0 | +0.05 | +0.02 | +0.02 | +0.03 |
| Lactate dehydrogenase (LDH) | [U/L] | 0 | +7 | +8 | +7 | +6 |

### [Example 4] Results obtained by using flat chip (fitting-type dry analysis element)

### (A) Fabrication of flat chip (fitting type)

The dry analysis element 50 in which the upper member 30 was fitted into the lower member 40 via the porous membrane 52, as shown in FIG. 12, was fabricated according to the following procedures.

Transparent polystyrene was used to form the upper member 30 and the lower member 40 of approximately 24mm x 28mm, respectively. The fitting convex part 35 and the fitting concave part 4 6 were approximately 9mm in diameter. Glass fiber subjected to acetic acid treatment and PMEA treatment to the glass fiber filter (GF/D made by Whatman plc.) for capturing red blood cells and extracting plasma was packed into a flow channel 34 as a filtration filter 36.

In addition, Fuji Dry Chem Mount Slide GLU-P and TBIL-P (made by Fuji Photo Film Co., Ltd.) were respectively cut into chips of less than 2mm in width and length, and arrayed at places of 9 cells 42 on the member 40 as a dry analysis component 54. Of these 9 places of cells 42, a total of 5 cells locating at the center and four corners were packed with the GLU-P chip and the remaining 4 cells were packed with the TBIL-P chip.

Then, a polysulfone porous membrane (made by Fuji Photo Film Co., Ltd.) was cut into a square with one side of approximately 18mm as a porous membrane 52. The polysulfone porous membrane was gently placed above the fitting concave part 46 and wedged into the fitting part where the fitting convex part 35 and the fitting concave part 46 are fitted to fit the upper member 30 into the lower member 40 (flat chip).

### (B) measuring device

The measuring device 100 shown in FIG. 11 was provided. The respective members were set as follows.
measuring device 100: invert stereoscopic microscope

The following two magnifications were available at a light-receiving part of CCD.
0.33 time: 33µm/pixel at part of CCD
1 time: 10µm/pixel at CCD of part
Light source 72: Lumina Ace LA-150UX made by Hayashi Watch-Works Co., Ltd.
Wavelength modulating part 74 (interference filter) : 625nm, 540nm and 505mm, each emitting one-color light
Light modulating part 73 (neutral density filter) : ND-25, glass filtermade by Hoya Corporation, and internally-made bored stainless-steel plate filter
Area sensor 76 (CCD): XC-7500, black-and-white camera module made by Sony Corporation (8 bit)
Computer 77 (data processing (image processing)) : LUZEX-SE, image processing equipment made by Nereco Corporation

Means for correcting reflected optical density: the following 6 types of standard concentration plate made by Fuji Kikai Kogyo Co., Ltd. (ceramic specifications) were provided.

### Standard concentration plate:

A00 (reflected optical density, up to 0.05),
A05 (same as above, up to 0.05),
A10 (same as above, up to 1.0),
A15 (same as above, up to 1.5),
A20 (same as above, up to 2.0),
A30 (same as above, up to 3.0).

### (C) Analysis by flat chip

A 200µL of whole blood collected by using a plain blood tube was infused to a supply port 32 of the above-fabricated fitting-type dry analysis element 50 (flat chip) and allowed to stand for 10 to 20 seconds to develop the whole blood on a glass fiber filter (filtration filter 36). Then, a silicon-made tube was connected to a suction nozzle 44, a disposable syringe (made by Terumo Corporation) was packed into a tip of the tube, and the piston of the syringe was gently drawn for suction.

When plasma extracted by filtration was dropped down to a drychem mount slide through a polysulfone porous membrane, GLU-P and TBIL-P slides gradually started to develop color.

30 seconds were required to extract and drop plasma to the mount slide after infusion of whole blood.

The measuring device 100 shown in FIG. 11 was used to image how the GLU-P and TBIL-P slides developed color. Such color development was also imaged by a CCD camera. Then, LUZEX-SE was used to treat the thus-obtained images, and the mean quantity of light received around the center of images of the GLU-P slide arrayed at the center of cell 42 and of the TBIL-P slide located next to the suction nozzle 44 was measured and converted to the optical density to measure glucose and the total bilirubin concentrations in a test sample were measured.

Where images taken by a CCD camera were treated with LUZEX-SE, the center portion of the images of the GLU-P and the TBIL-P were treated and calculated for the respective quantities of the light received at an area of 1.4mm in width and 1.4mm in length. Since the magnification used in this instance was 0.33 times in the optical system, the picture element was calculated based on 1764 pixels (42 pixels in width and 42 pixels in length). In order to comparatively check whether the result measured by the CCD camera was correct or not, an automatic test analyzer 7170 for laboratory examination (Hitachi Haramachi Electronics Co., Ltd.) was used to determine the concentrations of glucose and total bilirubin in the test sample. These results were shown in Table 7. In this instance, since the GLU-P and the TBIL-P slides were different in wavelength to be measured, as shown in Table 8, the wavelength of an interference filter was changed every 5 seconds sequentially to measure the light.

**Table 7 Table: Component values in whole blood determined by CCD detection**

| | Values obtained by CCD detection [mg/dL] | Values obtained by Hitachi analyzer 7170 [mg/dL] |
|---|---|---|
| Glucose | 82 | 90 |
| Total bilirubin | 0.84 | 0.40 |

**Table 8 Table: Sequence of irradiation by sequentially changing the wavelength and the quantity of light**

| Order | Wavelength [nm] |
|---|---|
| 1 | 505 |
| 2 | 540 |

| | |
|---|---|
| * order: to be sequentially changed as follows:1 → 2 → 1 → 2 → 1 →·· | |

The above findings revealed that the dry analysis element 50 can perform measurement without any leakage of red blood cells by simple operation. Similar results were obtained in a case where the upper member 30 was joined with the lower member 40 by ultrasonic fusion. It became, therefore, apparent that the fitting-type dry analysis element of the present invention was able to filter and analyze blood.

Herein, in this instance, dry chemistry reagents for two items were used as the dry analysis component 54, but the number of items may be increased, whenever necessary.

According to the present invention, a glass fiber filter for blood filtration can be provided that can prevent elution of components from a glass fiber and adsorption to a glass fiber.

Further, according to the present invention, a blood filtration device can be provided that can filtrate and collect plasma components similar to those obtained by centrifugation in a short time because plasma components are not changed in concentration.

In addition, according to the present invention, a blood analysis element can be provided that is improved in measurement accuracy, and promptly perform safe and easy operation for many items for detection because plasma components are not changed in concentration.

The entire disclosure of each and every foreign patent application from which the benefit of foreign priority has been claimed in the present application is incorporated herein by reference, as if fully set forth.

## Claims

1. A glass fiber filter for blood filtration comprising a glass fiber,
wherein a surface of the glass fiber is coated with a polymer.

2. A glass fiber filter for blood filtration comprising a glass fiber,
wherein the glass fiber is cleaned with an acid, and then a surface of the glass fiber is coated with a polymer.

3. The glass fiber filter for blood filtration according to claim 1,
wherein the polymer is an acrylate polymer.

4. The glass fiber filter for blood filtration according to Claim 3,
wherein the acrylate polymer is a poly (alkoxy acrylate).

5. A blood filtration device comprising a glass fiber filter for blood filtration according to claim 1.

6. The blood filtration device according to claim 5, which further comprises:
a plurality of members; and
a seal member,
wherein the plurality of members are fitted and the seal member is wedged into a part to be fitted, so as to attain a substantially air-proof and water-proof condition under a reduced pressure.

7. The blood analysis element comprising:
a glass fiber filter for blood filtration according to claim 1; and
a dry analysis component,
wherein a filtrate that has passed through the glass fiber filter contacts with the dry analysis component.
